# EUROPÄISCHE PATENTSCHRIFT

(11) **EP 2 186 587 B1**
(45) Veröffentlichungstag und Bekanntmachung des Hinweises auf die Patenterteilung: **12.09.2012**
(21) Anmeldenummer: 09013855.3
(22) Anmeldetag: 04.11.2009
(51) Int. Cl.: B23D 45/04, B27B 5/20

(54) **Kapp- und Gehrungssäge**
Mitre and mitre-box saw
Scie circulaire et scie à onglet

(30) Priorität: 14.11.2008 DE 202008015146 U
(43) Veröffentlichungstag der Anmeldung: 19.05.2010
(73) Patentinhaber: Metabowerke GmbH, 72622 Nürtingen (DE)
(72) Erfinder: Engelmann, Marcus, 49716 Meppen (DE); Bergmann, Laurenz, 49733 Haren / Ems (DE)
(74) Vertreter: Lorenz, Markus

(56) Entgegenhaltungen:
- EP-A1- 1 623 803
- EP-A1- 1 935 543
- GB-A- 2 304 074
- US-A- 5 839 339

## Beschreibung

Die Erfindung betrifft eine Kapp- und Gehnmgssäge mit den Merkmalen des Oberbegriffs von Anspruch 1. Eine derartige Kapp- und Gehrungssäge wird im US-A-5839339 offenbart.

Eine bekannte Kapp- und Gehrungssäge, von der die Erfindung ausgeht (EP-B-1 623 803), hat ein an einer Zugführung angebrachtes Sägeaggregat, das um eine im wesentlichen horizontal verlaufende Schwenkachse aus einer federvorgespannten, angehobenen Ruhestellung in eine zum Träger hinunter abgesenkte Sägestellung und umgekehrt schwenkbar ist. Um Sägeschnitte in einem Gehrungswinkel ausführen zu können, hat die Halterung dieser Kapp- und Gehrungssäge eine Neigungsverstellung, so daß das Sägeaggregat gegenüber dem Träger seitlich in eine bestimmte Neigungsstellung geneigt werden kann, Insbesondere kommen Gehrungsschnitte mit einem Gehrungswinkel von +/- 45° oder +/- 33° oder +/- 66° in Frage. Bestimmte Gehrungswinkel können reibschlüssig, insbesondere aber auch formschlüssig fixiert werden.

Bei der bekannten Kapp- und Gehrungssäge hat die Neigungsverstellung zusätzlich eine Federanordnung zur Gewichtskompensation des Sägeaggregates. Diese Federanordnung ist wirkungslos, wenn sich das Sägeaggregat in seiner mittigen Grundstellung (0°) befindet. Sobald diese Grundstellung verlassen wird, tritt die Federanordnung in Wirkung. Sie ist so ausgelegt, daß ohne eine besondere manuelle Kraftbeaufschlagung das Sägeaggregat in der Grundstellung verharrt. Es muß also durch Körperkraft des Bedieners in die jeweilige Neigungsstellung hinuntergedrückt werden und wird dann dort kraftschlüssig oder insbesondere formschlüssig fixiert.

Die Federanordnung dieser Kapp- und Gehrungssäge weist eine einzige, um die Neigungsschwenkachse der Neigungsverstellung herum angeordnete Schenkelfeder auf, deren Federschenkel mit entsprechenden Mitnehmern am Halter und Gegenhalter der Neigungsverstellung zusammenwirken. Das ist zweckmäßig, weil nur ein einziges Federbauteil in der Federanordnung Verwendung findet.

Der Lehre liegt das Problem zugrunde, die bekannte Kapp- und Gehrungssäge hinsichtlich der Kompensation der aus der Gewichtskraft des Sägeaggregates in einer bestimmten Neigungsstellung resultierenden Normalkraft zu optimieren.

Das zuvor aufgezeigte Problem ist mit den Merkmalen des Anspruchs 1 gelöst.

Erfindungsgemäß ist die Federanordnung so ausgelegt, daß die aus der Gewichtskraft des Sägeaggregates in einer bestimmten Neigungsstellung resultierende, in Richtung der Werkstückauflagefläche des Trägers gerichtete Normalkraft nicht bereits in der Grundstellung, sondern erst in einer bestimmten Neigungsstellung komplett kompensiert ist. Im Extremfall ist diese Neigungsstellung eine solche von mehr als 66°.

Wesentlich für die erfindungs gemäße Konstruktion ist es, daß die Federkraft der Federanordnung die Normalkraft nicht bereits in oder nahe der Grundstellung des Sägeaggregates kompensiert, sondern erst bei weiterer Neigung des Sägeaggregates. Dadurch kann man das Sägeaggregat mit geringem Kraftaufwand des Bedieners in eine gewünschte Neigungsstellung bringen. Das beim Stand der Technik erforderliche aktive Hinunterdrücken des Sägeaggregats in die gewünschte Neigungsstellung ist nicht erforderlich.

Die aus der Gewichtskraft des Sägeaggregates in einer bestimmten Neigungsstellung resultierende Normalkraft ist in der angehobenen Ruhestellung des Sägeaggregats größer als in der abgesenkten Sägestellung, weil in der Ruhestellung der wirksame Hebelarm größer ist. Für die nach der Lehre der Erfindung gewünschte Kompensation empfiehlt es sich, diese für die Ruhestellung des Sägeaggregates vorzusehen. Dann ist das Sägeaggregat in der gewünschten Neigungsstellung und in Ruhestellung i. w. ausbalanciert. Greift der Bediener an dem Sägeaggregat an, um den Sägeschnitt in der Neigungsstellung, also den Gehrungsschnitt auszuführen, so ist es dann nicht problematisch, wenn sich gewisse Kraftwirkungen am Sägeaggregat durch Wegfall der vollständigen Kompensation ergeben.

Besonders zweckmäßig ist es, wenn die Kompensation für eine ganz bestimmte, einem typischen Gehrungsschnitt entsprechende Neigungsstellung gilt, wobei hier insbesondere eine Winkel von 45°, also der typischste Gehrungswinkel, in Frage kommt.

Auch für die Kapp- und Gehrungssäge gemäß der Erfindung empfiehlt sich die Ausführung der Federanordnung mit einer einzigen Schenkelfeder. Diese wird zweckmäßigerweise mehrere Federwindungen aufweisen und/oder aus Federstahl bestehen.

Zweckmäßig ist es auch, wenn die Federanordnung geschützt in einer Federkammer angeordnet ist.

Im folgenden wird die Erfindung nun anhand einer lediglich ein bevorzugtes Ausführungsbeispiel darstellenden Zeichnung näher erläutert. In der Zeichnung zeigt
- Fig. 1: in perspektivischer Ansicht eine typische Kapp- und Gehrungssäge,
- Fig. 2: eine perspektivische Ansicht eines Halters einer Neigungsventellung gemäß der Erfindung,
- Fig. 3: in einer Fig. 2 entsprechenden Darstellung den Halter mit eingesetzter Neigungsschwenkachse und eingesetzter Schenkelfeder,
- Fig. 4: in perspektivischer Ansicht einen Gegenhalter einer erfindungsgemäßen Kapp- und Gehrungssäge,
- Fig. 5: in einer Fig. 4 entsprechenden Darstellung den Gegenhalter mit eingesetzter Schenkelfeder.

Die in der Zeichnung dargestellte Kapp- und Gehrungssäge ist grundsätzlich ganz klassisch aufgebaut. Sie hat einen Träger 1, der eine Werkstückauflagefläche 2 bildet. Im dargestellten Ausführungsbeispiel besteht der Träger 1 aus einem äußeren, feststehenden Rahmen und einem inneren, gegenüber dem Rahmen drehbaren Drehtisch. Darauf kommt es aber für die Lehre der Erfindung nicht an.

Am Träger 1 ist eine Halterung 3 angebracht, an der sich wiederum ein oberhalb der Werkstückauflagefläche 2 angeordnetes Sägeaggregat 4 befindet. Dieses Sägeaggregat 4, hier mit einem Kreissägeblatt ausgerüstet, definiert eine Sägeschnittrichtung, die sich in einem Eintauchschlitz 5 auf der Werkstückauflagefläche 2 wiederfindet. Im konkreten Ausführungsbeispiel ist das Sägeaggregat 4 selbst wieder an einer Zugführung 6 an der Halterung 3 gelagert. Auch darauf kommt es im Rahmen der Lehre der Erfindung jedoch nicht an.

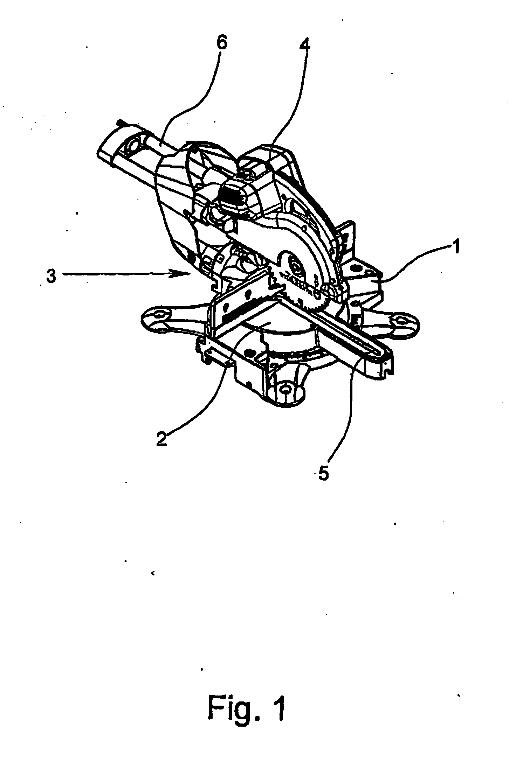

Das Sägeaggregat 4 ist um eine i, w. horizontal verlaufende Schwenkachse aus einer angehobenen Ruhestellung, die in Fig. 1 gezeigt ist, in eine zum Träger 1 hinunter abgesenkte Sägestellung und umgekehrt schwenkbar.

Die Halterung 3 weist eine Neigungsverstellung auf. Mit der Neigungsverstellung läßt sich das Sägeaggregat 4 in Fig. 1 relativ zum Träger 1 nach links oder rechts neigen, so daß entsprechende Gehrungssahnitte ausgeführt werden können.

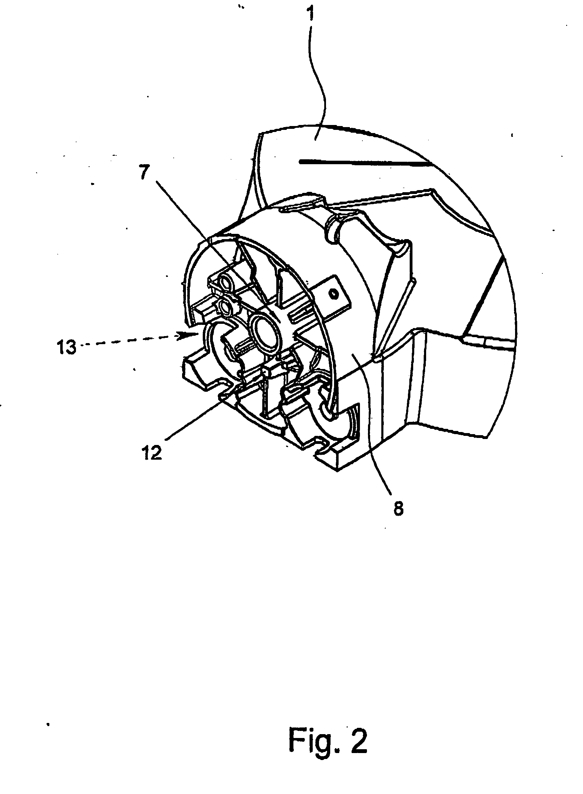

Die Lehre der Erfindung befaßt sich mit der Ausgestaltung der Neigungsverstellung. Die Details der Neigungsverstellung ergeben sich aus den Fig. 2 bis 5.

Mittels der Neigungsverstellung ist das Sägeaggregat 4 gegenüber dem Träger 1 um eine i. w. horizontal in Sägeschnittrichtung verlaufende Neigungsschwenkachse 7 aus seiner mittigen Grundstellung (0°), die in Fig. 1 gezeigt ist, in mindestens eine seitliche Neigungsstellung, beispielsweise nach rechts auf 45°, ggf. aber auch nach rechts und links auf entsprechend passende Gradzahlen schwenkbar.

Normalerweise gibt es an der Neigungsverstellung formschlüssige Fixierungen für bestimmte, häufig verwendete Neigungswinkel und im übrigen eine kraftschlüssige Fixierung für alle Neigungswinkel.

Die Neigungsschwenkachse 7 muß nicht unbedingt körperlich vorhanden sein. Es kann auch eine lediglich virtuell vorhandene Neigungsschwenkachse sein, die beispielsweise lediglich als Mittelpunkt einer Kulissenführung vorhanden ist.

Zur Ausbildung der Neigungsverstellung weist die Halterung 3 einen mit dem Träger 1 verbundenen feststehenden Halter 8 sowie einen mit dem Sägeaggregat 4 verbundenen Gegenhalter 9 auf. Der Gegenhalter 9 kann mit dem Sägeaggregat 4 direkt oder, wie im dargestellten Ausführungsbeispiel über die Zugführung 6 indirekt verbunden sein. Wichtig ist, daß der Gegenhalter 9 mit dem Sägeaggregat 4 gegenüber dem Träger 1 und dem mit diesem verbundenen Halter 8 schwenkt.

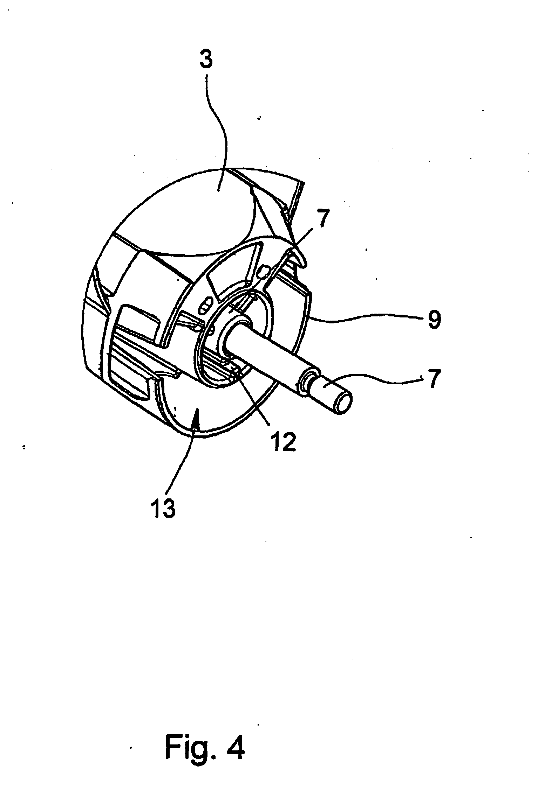

Der Gegenhalter 9 ist koaxial zu dem Halter 8 angeordnet, was man aus einem Vergleich von Fig. 2 und 4 erkennt. Die gemeinsame Achse ist hier die körperlich vorhandene Neigungsschwenkachse 7. Der Gegenhalter 9 ist relativ zu dem Halter 8 um die Neigungsschwenkachse 7 schwenkbar.

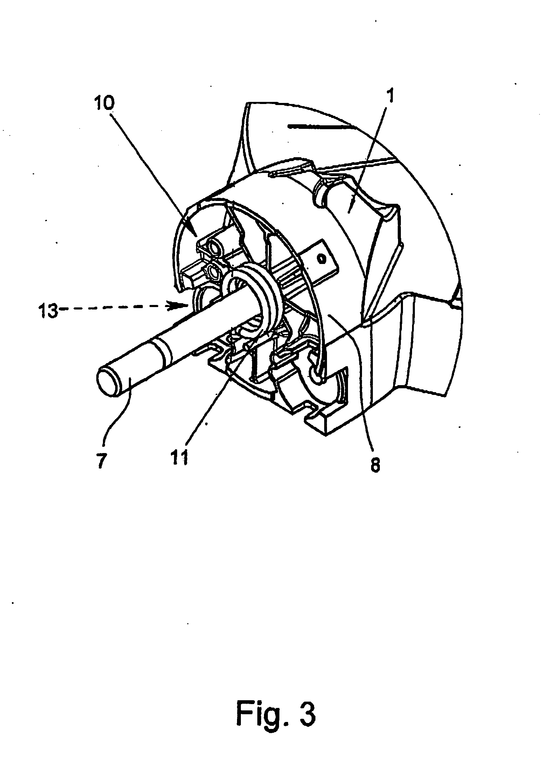

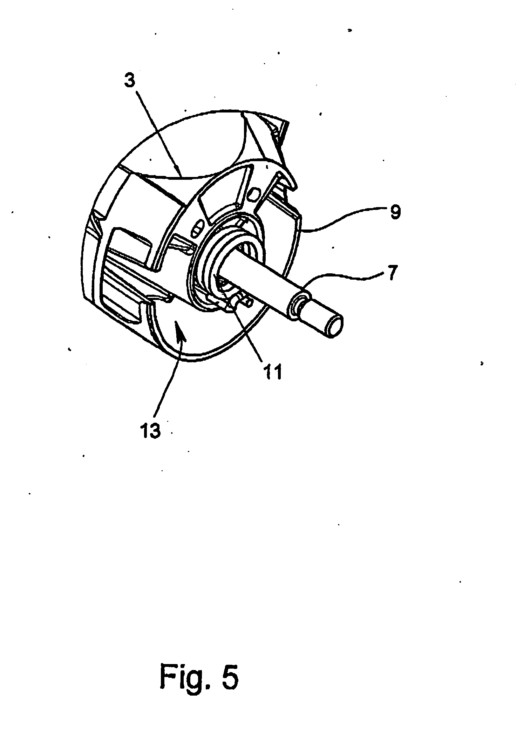

Zwischen dem Halter 8 und dem Gegenhalter 9 ist eine Federanordnung 10 vorgesehen (Fig. 3 und 5). Diese wird bei seitlichem Schwenken des Gegenhalters 9 aus der Grundstellung in Richtung der Neigungsstellung vorgespannt. Durch diese Bewegung des Sägeaggregates 4 aus der Grundstellung in Richtung der Neigungsstellung wird die Gewichtskraft des Sägeaggregates 4 zunehmend als Normalkraft wirksam. Die Federkraft de Federanordnung 10 wirkt dieser Normalkraft entgegen.

Das dargestellte und bevorzugte Ausführungsbeispiel zeichnet sich nun dadurch aus, daß die Federanordnung 10 so ausgelegt ist, daß die Normalkraft des Sägeaggregats 4 in einer bestimmten Neigungsstellung gerade i. w. kompensiert ist.

Dabei ist es besonders zweckmäßig, daß die Kompensation für die Ruhestellung des Sägeaggregates 4 gilt.

Insbesondere empfiehlt es sich, daß die Kompensation für eine ganz bestimmte Neigungsstellung mit einem typischen Winkel, insbesondere für einen Winkel von etwa 45° gilt.

Im Stand der Technik ist es bekannt, daß man Federanordnungen 10 der in Rede stehenden Art aus mehreren einzelnen Federelementen zusammensetzt (EP-A-1 935 543). Die den Ausgangspunkt für die Lehre bildende Kapp- und Gehrungssäge (EP-B-1 623 803) weist insoweit bereits eine konstruktiv besonders zweckmäßige Lösung auf, weil nur eine einzige Feder vorgesehen ist.

Das dargestellte und bevorzugte Ausführungsbeispiel zeigt eine entsprechende, zweckmäßig konstruierte Variante dergestalt, daß die Federanordnung 10 eine einzige, um die Neigungsschwenkachse 7 herum angeordnete Schenkelfeder 11 aufweist, deren Federschenkel mit entsprechenden Mitnehmern 12 am Halter 8 und Gegenhalter 9 zusammenwirken.

Man erkennt in den Fig. 2 und 4 Halter 8 und Gegenhalter 9 ohne eingesetzte Schenkelfeder 11. Hier kann man auch den jeweils vorhandenen Mitnehmer 12, der leistenartig ausgebildet ist und sich in Sägeschnittrichtung erstreckt, erkennen.

In Fig. 3 und 5 finden sich dieselben Darstellungen wie in Fig. 2 und 4 jedoch nun mit eingesetzter Schenkelfeder 11. Es zeigt sich, daß deren Federschenkel mit den beiden Mitnehmern 12 an Halter 8 und Gegenhalter 9 in Eingriff stehen, wenn der Gegenhalter 9 am Halter 8 koaxial angesetzt ist.

Es liegt auf der Hand, daß diese Konstruktion besonders einfach und montagegünstig ist. Im dargestellten Ausführungsbeispiel dient die Neigungsschwenkachse 7 als Aulsteckachse für die Schenkelfeder 11. Diese weist hier zur Erbringung einer hinreichenden Federkraft mehrere Federwindungen auf. Sie wirkt als Torsions-Schenkelfeder. Zweckmäßigerweise besteht die Schenkelfeder 11 auch im dargestellten Ausführungsbeispiel aus einem beanspruchbaren Federstahl.

Die Fig. 2 bis 5 zeigen im Zusammenhang, daß der Halter 8 mit dem Gegenhalter 9 insgesamt eine geschlossene Anordnung mit einer i. w. geschlossenen Federkammer 13 bildet, in der die Federanordnung 10 mit der Schenkelfeder 11 verschmutzungssicher angeordnet ist.

## Patentansprüche

1. Kapp- und Gehrungssäge,
mit einem Träger (1), der eine Werkstückauflagefläche (2) bildet, und einer am Träger (1) angebrachten Halterung (3) für ein oberhalb der Werkstückauflagefläche (2) angeordnetes, eine Sägeschnittrichtung definierendes Sägeaggregat (4), wobei, vorzugsweise, das Sägeaggregat (4) um eine i. w. horizontal verlaufende Schwenkachse aus einer angehobenen Ruhestellung in eine zum Träger (1) hinunter abgesenkte Sägestellung und umgekehrt schwenkbar ist,
wobei die Halterung (3) eine Neigungsverstellung aufweist, mit der das Sägeaggregat (4) gegenüber dem Träger (1) um eine i. w. horizontal in Sägeschnittrichtung verlaufende Neigungsschwenkachse (7) aus einer mittigen Grundstellung von 0° in mindestens eine seitliche Neigungsstellung (z. B. von +/- 45°) schwenkbar ist, wobei die Halterung (3) einen mit dem Träger (1) verbundenen feststehenden Halter (8) und einen mit dem Sägeaggregat (4) verbundenen Gegenhalter (9) aufweist,
wobei der Gegenhalter (9) koaxial zu dem Halter (8) angeordnet und relativ zu dem Halter (8) um die Neigungsschwenkachse (7) schwenkbar ist und
wobei eine zwischen dem Halter (8) und dem Gegenhalter (9) wirksame Federanordnung (10) vorgesehen ist, die bei seitlichem Schwenken des Gegenhalters (9) aus der Grundstellung in Richtung der Neigungsstellung gespannt wird und der dabei als Normalkraft wirksam werdenden Gewichtskraft des Sageaggregats (4) entgegenwirkt,
**dadurch gekennzeichnet,**
**dass** die Federanordnung (10) so ausgelegt ist, dass die Normalkraft des Sägeaggregats (4) in einer bestimmten Neigungsstellung gerade i. w. kompensiert ist.

2. Kapp- und Gehrungssäge nach Anspruch 1, **dadurch gekennzeichnet, daß** die Kompensation für die Ruhestellung des Sägeaggregates (4) gilt.

3. Kapp- und Gehrungssäge nach Anspruch 1 oder 2, **dadurch gekennzeichnet, daß** die Kompensation für eine Neigungsstellung mit einem Winkel von etwa 45° gilt.

4. Kapp- und Gehrungssäge nach einem der Ansprüche 1 bis 3, dadurch gekennzeichnen
daß die Federanordnung (10) eine einzige, vorzugsweise um die Neigungsschwenkachse (7) herum angeordnete Schenkelfeder (11) aufweist, deren Federschenkel mit entsprechenden Mitnehmern (12) am Halter (8) und Gegenhalter (9) zusammenwirken.

5. Kapp- und Gehrungssäge nach Anspruch 4, **dadurch gekennzeichnet,**
**daß** die Schenkelfeder (11) mehrere Federwindungen aufweist

6. Kapp- und Gehmagssäge nach Anspruch 4 oder 5, **dadurch gekennzeichnet, daß** die Schenkelfeder (11) aus Federstahl besteht.

7. Kapp- und Gehrungssäge nach einem der Ansprüche 1 bis 6, **dadurch gekennzeichnet,**
**daß** die Federanordnung (10) in einer von Halter (8) und Gegenhalter (9) gebildeten, i. w, geschlossenen Federkammer (13) angeordnet ist.

## Claims

1. Chop and miter saw,
comprising a carrier (1) forming a bearing surface for work pieces (2) and a holder (3) for a sawing aggregate (4) that is attached to the carrier (1), the sawing aggregate defining the saw cut direction and being arranged above the bearing surface for work pieces,
wherein the sawing aggregate (4) preferably is pivotable about a pivot axis extending in a substantially horizontal direction from a lifted rest position to a sawing position lowered down to the carrier (1) and vice versa,
wherein the holder (3) comprises an angle adjustment with which the sawing aggregate (4) is pivotable relative to the carrier (1) about a pivot axis (7) extending in a substantially horizontal direction of the saw cut from a central basic position of 0°to at least one inclined position (e.g. of +/- 45°),
wherein the holder (3) comprises a stationary support (8) connected to the carrier (1) and a counter support (9) connected to the sawing aggregate (4),
wherein the counter support (9) is arranged coaxially to the support (8) and is pivotable about the pivot axis (7) relative to the support (8) and
wherein an active spring arrangement (10) is provided between the support (8) and the counter support (9), the spring arrangement being is stressed, when the counter support (9) is pivoted from the basic position towards the inclined position and counteracts the weight of the sawing aggregate (4) that comes into effect as normal force,
**characterized in that**
the spring arrangement (10) is adapted such that the normal force of the sawing aggregate (4) is substantially just compensated in a certain inclined position.

2. Chop and miter saw according to claim 1,
**characterized in that** the compensation applies for the rest position of the sawing aggregate (4).

3. Chop and miter saw according to the claims 1 or 2,
**characterized in that** the compensation applies for a inclined position with an angle of about 45°.

4. Chop and miter saw according to one of the claims 1 to 3,
**characterized in that** the spring arrangement (10) comprises one single leg spring (11) that is preferably arranged around the pivot axis (7), the spring legs of which act together with corresponding carriers (12) on the support (8) and the counter support (9).

5. Chop and miter saw according to claim 4,
**characterized in that** the leg spring (11) comprises several spring coils.

6. Chop and miter saw according to claim 4 and 5,
**characterized in that** the leg spring (11) consists of spring steel.

7. Chop- and miter saw according to one of the claims 1 to 6,
**characterized in that** the spring arrangement (10) is arranged in an essentially closed spring chamber (13) that is formed by the support (8) and the counter support (9).

## Revendications

1. Scie circulaire et scie à onglet,
comportant un support (1) qui constitue une surface d'appui (2) pour une pièce d'usinage et un élément de maintien (3) solidaire du support (1), d'un assemblage de sciage (4) disposé au-dessus de la surface d'appui (2) de la pièce d'usinage et définissant une direction de coupe,
dans laquelle, l'assemblage de sciage (4) est de préférence agencé pour pouvoir pivoter autour d'un axe sensiblement horizontal d'une position de repos relevée dans une position de sciage abaissée vers le support (1) et réciproquement,
dans laquelle l' élément de maintien (3) comporte un dispositif de réglage de l'inclinaison par lequel l'assemblage de sciage (4) peut pivoter latéralement autour d'un axe de pivotement (7) sensiblement horizontal orienté dans le sens de la coupe, dans au moins une position inclinée latéralement (par exemple de +/- 45°) à partir d'une position centrale de 0°,
dans laquelle l'élément de maintien (3) comporte un support fixe (8) lié au support (1) et un contre-support (9) lié à l'assemblage de sciage (4),
sans laquelle, le contre-support (9) est disposé coaxialement par rapport au support fixe (8) et agencé pour pouvoir pivoter autour de l'axe de pivotement (7) par rapport au support fixe (8), et
dans laquelle un agencement à ressort (10) est monté entre le support fixe (8) et le contre-support (9), qui, lors d'un pivotement latéral du contre-support (9) hors de la position de base vers la direction inclinée, développe une force de rappel qui s'oppose à la force normale liée au poids en agissant sur l'assemblage de sciage (4),
**caractérisée en ce que** l' agencement à ressort (10) est agencé pour qu'il compense sensiblement la force normale de l'assemblage de sciage (4) dans une position inclinée déterminée.

2. Scie circulaire et scie à onglet selon la revendication 1, **caractérisée en ce que** la compensation est adaptée à la position de repos de l'assemblage de sciage (4).

3. Scie circulaire et scie à onglet selon les revendications 1 ou 2, **caractérisée en ce que** la compensation est adaptée à une position inclinée faisant un angle d'environ 45°.

4. Scie circulaire et scie à onglet selon l'une des revendications 1 à 3, **caractérisée en ce que**,
l'agencement à ressort (10) comporte un seul ressort de torsion (11) de préférence disposé autour de l'axe de pivotement (7), dont les embouts d'extrémité coopèrent avec différents éléments d'appui (12) solidaires du support (8) et du contre-support (9).

5. Scie circulaire et scie à onglet selon la revendication 4, **caractérisée en ce que** le ressort de torsion (11) comporte plusieurs spires.

6. Scie circulaire et scie à onglet selon la revendication 4 ou 5, **caractérisée en ce que** le ressort de torsion (11) est réalisé en acier à ressort.

7. Scie circulaire et scie à onglet selon l'une des revendications 1 à 6, **caractérisée en ce que**,
l'agencement à ressort (10) est monté à l'intérieur d'une chambre à ressort (13) sensiblement fermée, constituée par le support (8) et le contre-support (9).
